# EUROPEAN PATENT SPECIFICATION

(11) **EP 1 186 454 B1**
(45) Date of publication and mention of the grant of the patent: **03.05.2006**
(21) Application number: 01117180.8
(22) Date of filing: 16.07.2001
(51) Int. Cl.: B60J 5/04, B60R 13/02, B29C 65/02

(54) **Method for producing lined panels for motor-vehicles**
Herstellungsverfahren überzogenener Paneele für Kraftfahrzeuge
Procédé de fabrication de panneaux revêtus pour véhicules à moteur

(30) Priority: 05.09.2000 IT PN000053
(43) Date of publication of application: 13.03.2002
(73) Proprietor: Plastal S.p.A., 33170 Pordenone (IT)
(72) Inventor: Caranfil, Antonio, 31046 Oderzo, Treviso (IT)
(74) Representative: Giugni, Valter

(56) References cited:
- EP-A- 0 370 767
- EP-A- 0 514 541
- PATENT ABSTRACTS OF JAPAN vol. 1996, no. 10, 31 October 1996 (1996-10-31) & JP 08 155994 A (ARACO CORP), 18 June 1996 (1996-06-18)
- PATENT ABSTRACTS OF JAPAN vol. 013, no. 170 (M-817), 21 April 1989 (1989-04-21) & JP 01 004555 A (KANEBO TEXTILE KK;OTHERS: 01), 9 January 1989 (1989-01-09)
- PATENT ABSTRACTS OF JAPAN vol. 012, no. 428 (M-762), 11 November 1988 (1988-11-11) & JP 63 160823 A (TAKASHIMAYA NITSUPATSU KOGYO KK), 4 July 1988 (1988-07-04)
- PATENT ABSTRACTS OF JAPAN vol. 014, no. 424 (M-1024), 12 September 1990 (1990-09-12) & JP 02 167725 A (NISHIKAWA KASEI KK), 28 June 1990 (1990-06-28)
- PATENT ABSTRACTS OF JAPAN vol. 017, no. 240 (M-1409), 14 May 1993 (1993-05-14) & JP 04 365623 A (NISHIKAWA KASEI CO LTD), 17 December 1992 (1992-12-17)
- PATENT ABSTRACTS OF JAPAN vol. 015, no. 217 (M-1120), 4 June 1991 (1991-06-04) & JP 03 063200 A (PEARL KOGYO KK), 19 March 1991 (1991-03-19)

## Description

The present invention refers to a new method for producing lined panels for motor-vehicles, in particular panels for the internal lining of the vehicle doors, made with the use of a transpiring material, such as a textile fabric, attached on to a support of rigid material, such as known for example from EP-A-0 370 767.

As generally known, the inner surface of the doors of motor-vehicles is appropriately lined owing not only to aesthetical reasons, but also in view of ensuring a greater extent of comfort to both the driver and the passengers. The lining panel terminates flush with the window pane that is mounted in a vertically slidable manner inside the door. The panel must be appropriately shaped and provided with apertures allowing for handles, switches and other functional component parts to pass therethrough. Furthermore, the panel must be provided with an upper border that allows for the attachment of a gasket ensuring a sealing effect against the window pane, in such a manner as to effectively prevent water and dust from seeping therethrough and penetrating the interior of the door assembly when the window pane is operated to slide upwards and downwards. Quite obviously, the lining panel shall further be made in such a manner as to effectively prevent the border thereof from getting stuck or jammed against the edge of the sliding pane when the latter is operated to slide upwards.

These panels are currently manufactured according to various methods. So, for example, a first solution calls for a plastic material to be moulded by over-injection onto a piece of cloth or the like. This method, however, requires the use of special, very expensive moulds and machines and the method itself is such as not to allow for an appropriately sharp definition to be obtained as far as not only the edges of the panel are concerned, but also the apertures to be provided in the same panel.

A second solution consists in the use of a thermal-compression moulding process, which calls for the use of a sheet of plastic material to be heated up by conduction in contact with the hot moulds. The panel that is obtained with this method, however, does not allow for the various edges thereof to be obtained to a really satisfactory accurate extent, and furthermore requires the use of stiffening ribs and attachment flanges, which cannot be produced directly, ie. integrally, but must be applied subsequently by welding or adhesive-bonding. It therefore ensues that such a method turns unavoidably out as requiring a lot of time and being quite expensive to be completed.

Another solution yet calls for the cloth to be applied onto a support of plastic material and both layers be then bonded in a mould by means of a radio-frequency welding technique. Even in this case, anyway, the need arises for the use of special machines and tools, and the cost of the end product turns eventually out to be quite elevated.

Finally, the above cited panels can be manufactured by thermoforming, using infrared heating. The cloth is drawn down into close contact with the plastic support in order to be bonded thereto. Such a suction effect can however be only brought about if the cloth does not transpire. As a result, it is necessary for a film to be preliminarily applied to the cloth and this obviously adds to the complexity of the process and the cost of the end product.

It therefore is a purpose of the present invention to provide a method for producing lined panels for application to the interior of motor-vehicles, which is really simple and effective since it makes use of materials and means that do not require any preliminary or supplementary processing, while ensuring the best possible finishing of the panel in all of the details thereof.

This aim is reached in a method according to the hereto appended claim 1, in which a transpiring material and a rigid support are fixed on the opposing faces of the die of a press, respectively, wherein a heat-revivable glue is applied onto said material and/or said support. The glue itself is then heat-revived, ie. softened through the temporary insertion of a heating device between said opposing faces of the forming die. The actual bonding of the transpiring material to the rigid support is eventually brought about by the forming die being clamped down.

Anyway, features and advantages of the present invention will be more readily understood from the description that is given below by way of non-limiting example with reference to the accompanying drawings, in which:
- Figure 1 is a schematical bottom view of a press for carrying out the method according to the present invention; and
- Figures 2 to 4 are schematical views of some particular steps of the method according to the present invention.

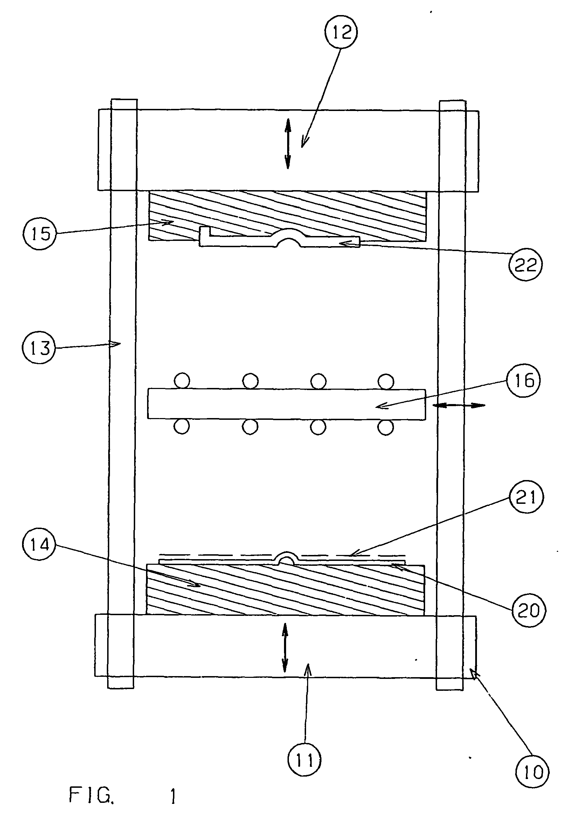

As illustrated in Figure 1, the method according to the present invention is carried out under utilization of a standard forming press 10, which is provided with two platens 11 and 12 that are connected by vertical columns 13 along which at least one of said platens is capable of sliding, To these platens 11 and 12 there are attached a die 14 and a counter-die 15.

A heating device 16, which is preferably formed by a plate carrying on the lower and upper surfaces thereof an array of infrared lamps or an array of electric heating elements, is mounted in the press 10 with the possibility for it to slide on a horizontal plane that is substantially equidistant from the two platens 11 and 12.

According to the present invention, on the upper surface of the die 14 there is arranged a piece 20 of transpiring material, ie. a piece of cloth in the case considered here as an example, over which a layer of heat-softening glue 21, such as a polyurethane-based glue, is then spread. Similarly, on the lower surface of the counter-die 15 there is attached a piece of rigid material 2, which is preferably of a thermoplastic resin, but may be of wood or metal as well. As an alternative, the layer of glue 21 may be spread either over the piece 22 or on both pieces 20 and 22.

Before the press 10 is operated to clamp the die and the corresponding counter-die together, the glue 21 is re-activated, ie. caused to soften, at a temperature of approx. 130°C, through the temporary insertion and corresponding energization of the heating device 16 between the die and counter-die 14 and 15.

The piece 22 will form the support of the transpiring material 20. The use of a transpiring material, such as a cloth, allows for surface blisters to be prevented from forming when the two pieces 20 and 22 are glued to each other by compression as the above cited die and counter-die are clamped down onto each other.

Quite obviously, the cloth 20 and the support 22 are appropriately sized and shaped, including the required apertures, so as to ensure that the panel resulting from the mutual joining thereof corresponds to the particular shape of the item that is intended to be lined therewith, such as in particular the door of a motor-vehicle.

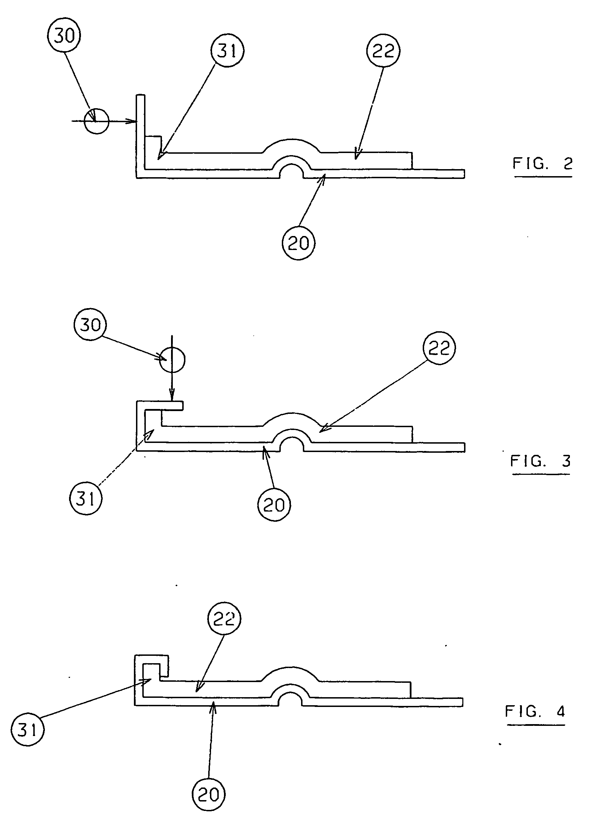

As already stated earlier in this description, in the case of an inner lining of the door of a motor-vehicle, the upper edge of the panel shall be so shaped as to allow for the attachment of a gasket, against which the window-pane of the door must then slide, to thereby ensure an effective sealing against water and dust. The panel shall therefore be finished with some kind of appropriate curling or flanging, ie. edge-forming operation. According to another feature of the present invention, it will be sufficient to this purpose for a phase of partial re-opening of the dies to be added to the afore described process in view of using one or more sliding blocks or pads 30 which are inserted between the same dies and are actuated with either linear or rotary motions to fold and cause the end portion of the piece of cloth 20 to adhere against the folded border 31 of the rigid support 22. The positions taken progressively by both the work-pieces and the devices during this processing phase are shown schematically in Figures 2 to 4.

In this case, however, the layer of glue must necessarily be applied only onto the cloth 20, and not onto the support 22, since it practically proves impossible for the glue to be applied on the inner surface of the folded border 31.

Conclusively, it can therefore be stated that the method according to the present invention enables lined panel for motor-vehicles to be manufactured in a simple, effective and low-cost manner, since it makes use of a normal press combined with a heating device and, possibly, a device for folding the border of the panel.

## Claims

1. Method for producing lined panels for motor-vehicles, in particular panels for the internal lining of the vehicle doors made with the use of a transpiring material, such as a textile fabric or cloth, attached on to a support of rigid material, **characterized in that** the transpiring material (20) and the rigid support (22) are attached to the die (14) and corresponding counter-die (15) of a press, respectively, in which on said material and/or said support there is applied a layer of heat-softening glue (21), in which the glue is heat-softened through the temporary insertion of a heating device (16) between said die and corresponding counter-die of the press, and the transpiring material is glued onto the rigid support through said die and counter-die of the press being clamped down onto each other.

2. Method according to claim 1, **characterized in that** the heat-softening glue (21) is a glue of a polyurethane-based type that is heated up to approx. 130°C.

3. Method according to claim 1 or 2, **characterized in that**, for finishing the edges of the panels, said die and corresponding counter-die (14, 15) of the press are partially re-opened and one or more sliding blocks (30) are inserted therebetween and operated with linear or rotary motions to fold and cause the end portion of the transpiring material (20) to adhere to the folded edge (31) of the support.

## Patentansprüche

1. Verfahren zum Herstellen verkleideter Platten für Kraftfahrzeuge, insbesondere Platten für die Innenverkleidung von Fahrzeugtüren, die unter Verwendung eines atmungsaktiven Materials, wie beispielsweise textilem Gewebe oder Stoff, hergestellt werden, das an einem Träger aus starrem Material angebracht ist, **dadurch gekennzeichnet, dass** das atmungsaktive Material (20) und der starre Träger (22) an dem Stempel (14) bzw. einem entsprechenden Gegenstempel (15) einer Presse angebracht sind, wobei auf das Material und/oder den Träger eine Schicht aus thermisch erweichbarem Klebstoff (21) aufgetragen ist und der Klebstoff durch das vorübergehende Einführen einer Erwärmungsvorrichtung (16) zwischen den Stempel und den entsprechenden Gegenstempel der Presse thermisch erweicht wird, und das atmungsaktive Material **dadurch** an dem starren Träger angeklebt wird, dass der Stempel und der Gegenstempel der Presse aneinander gespannt werden.

2. Verfahren nach Anspruch 1, **dadurch gekennzeichnet, dass** der thermisch erweichbare Klebstoff (21) ein Klebstoff auf Polyurethanbasis ist, der auf ungefähr 130°C erwärmt wird.

3. Verfahren nach Anspruch 1 oder 2, **dadurch gekennzeichnet, dass**, um die Kanten der Platten nachzubearbeiten, der Stempel und der entsprechende Gegenstempel (14, 15) der Presse teilweise wieder geöffnet werden und einer oder mehrere Gleitblöcke (30) dazwischen eingeführt und mit linearen oder drehenden Bewegungen betätigt werden, um den Endabschnitt des atmungsaktiven Materials (20) zu biegen und zu bewirken, dass er an der gebogenen Kante (31) des Trägers haftet.

## Revendications

1. Procédé de fabrication de panneaux à garnissage pour véhicules à moteur, en particulier de panneaux destinés au garnissage interne des portières de véhicule fabriquées en utilisant un matériau respirant, par exemple un tissu ou une toile, fixé sur un support en matériau rigide, **caractérisé en ce que** le matériau respirant (20) et le support rigide (22) sont fixés respectivement sur la matrice (14) et sur la contre-matrice (15) d'une presse, dans lequel il est appliqué sur ledit matériau et / ou sur ledit support une couche de colle ramollie à chaud (21), dans lequel la colle est ramollie à chaud gràce à l'introduction temporaire d'un dispositif de chauffage (16) entre ladite matrice et ladite contre-matrice correspondante de la presse, et le matériau respirant est collé sur le support rigide par l'intermédiaire de ladite matrice et de ladite contre-matrice de la presse qui sont serrées vers le bas l'une sur l'autre.

2. Procédé selon la revendication 1, **caractérisé en ce que** la colle ramollie à chaud (21) est une colle de type à base de polyuréthane qui est chauffée à approximativement 130° C.

3. Procédé selon la revendication 1 ou la revendication 2, **caractérisé en ce que**, pour la finition des bords des panneaux, ladite matrice et ladite contre-matrice (14, 15) de la presse sont en partie à nouveau ouvertes et un ou plusieurs blocs coulissants (30) sont introduits entre elles et soumis à des mouvements linéaires ou rotatifs afin de replier et de provoquer l'adhérence de la partie d'extrémité du matériau respirant (20) sur le bord replié (31) du support.
